# EUROPEAN PATENT SPECIFICATION

(11) **EP 2 477 355 B1**
(45) Date of publication and mention of the grant of the patent: **16.01.2019**
(21) Application number: 09849120.2
(22) Date of filing: 10.11.2009
(51) Int. Cl.: H04L 12/24

(54) **METHOD AND DEVICE FOR MANAGING ASSOCIATION OF NETWORK RESOURCES**
VERFAHREN UND VORRICHTUNG ZUR VERWALTUNG DER ASSOZIATION VON NETZWERKRESSOURCEN
PROCÉDÉ ET DISPOSITIF DE GESTION D'ASSOCIATION DE RESSOURCES DE RÉSEAU

(30) Priority: 11.09.2009 CN 200910169976
(43) Date of publication of application: 18.07.2012
(73) Proprietor: ZTE Corporation, Shenzhen, Guangdong 518057 (CN)
(72) Inventor: ZHANG, Zhenbo, Shenzhen Guangdong 518057 (CN)
(74) Representative: Brunner, John Michael Owen
(86) International application number: PCT/CN2009/074884
(87) International publication number: WO 2011/029244

(56) References cited:
- CN-A- 1 595 887
- CN-A- 1 738 256
- CN-A- 1 909 473
- CN-A- 101 193 335
- US-A1- 2002 087 665
- US-A1- 2002 087 734
- US-A1- 2004 243 613
- US-A1- 2007 005 887
- US-A1- 2009 210 481

## Description

### Field of the Invention

The present invention relates to a network management system in a core network, and in particular to a method and a device for association management of network resources.

### Background of the Invention

Network resources are the abstraction of specific resources in a managed network and the standardized organization of specific resources in a network management system. The network resources provide the objects which can be monitored for the network management system by building models for the specific resources in the managed network. Network resources have become the core concept of the network management system.

Various association relationships exist among the network resources. However, at present, as to the solution for the association relationships of the network resources, a generally adopted method is that a relational database establishes association between primary key and foreign key during modeling, and then improvisational development is made according to service requirements during program development, and there is no better solution. However, this method can not manage and maintain the association relationships between network resources on the whole, and the relationship maintenance between new network resources and old network resources can only be solved by code reconstruction. The data model without complete association relationships can not well solve such problems as resource query, resource association analysis, and resource exclusive usage.

US 20021087734 A1 relates to a system and method for managing dependencies in a component-based system. The process includes defining a resource that is part of an entity, recording a resource specifier for the resource, and recording resource dependency relationships definitions for the resource. The resource and its dependency relationships may be deployed to a system. The deployment may include verifying the existence of all dependency relationship resources of the resource on the system.

### Summary of the Invention

In view of the above, a method and a device for association management of network resources is provided in the present invention, which can establish a complete association relationship for the network resources.

A method according to the present invention is defined in appended claim 1. A device according to the present invention is defined in appended claim 9. Preferred embodiments are defined in appended dependent claims.

A method for association management of network resources, comprising the steps of:
a service side classifying network resources, setting resource type identifiers for the network resources and sending a dependency relationship between the resource type identifier and the resource type to a system side;
the system side building a data model for storing resource type dependency relationships according to the received dependency relationships between the resource type identifiers and the resource types; and
the system side providing interfaces used for operating the resource type dependency relationships and one or more interfaces used for operating resource instance dependency relationships for the service side;
in which, the step of building a data model comprises the step of:
creating a data structure of the resource types, wherein the data structure includes a data field and a successor field, in which the data field stores the resource type identifiers of the resource types or a resource type object containing the resource type identifiers, and the successor field stores the dependency relationships of the resource types.

The data structure may further comprise a predecessor field which stores the depended relationships of the resource types;
in which, after the system side builds the data model to finish the management of the resource type dependency relationships, the method further comprises the step of: performing reliability check for the built dependency relationships between the resource types;
the interfaces used for operating the resource type dependency relationships comprise a query interface of the resource type dependency relationships; and
the method further comprises the step of: the service side inquiring from the system side about the resource type dependency relationships through the query interface of the resource type dependency relationships;
in which, the process of inquiring about the resource type dependency relationships comprises the steps of:
the service side providing a resource type identifier for the system side through the query interface of the resource type dependency relationships; the system side obtaining a dependency relationship set of the resource types according to the resource type identifier; and the system side returning the obtained dependency relationship set of the resource types to the service side through the query interface of the resource type dependency relationships;
in which, the one or more interfaces used for operating the resource instance dependency relationships comprise: a creating interface of the resource instance dependency relationships, a deleting interface of the resource instance dependency relationships and a query interface of the resource instance dependency relationships.

Alternatively, the one or more interfaces used for operating the resource instance dependency relationships is an obtaining interface of the resource instance dependency relationships; and
the method further comprises the step of: the service side obtaining the resource instance dependency relationships from the system side through the obtaining interface of the resource instance dependency relationships;
in which, the process of obtaining the resource instance dependency relationships comprises the steps of: the service side providing a resource instance and resource type identifiers of the resource types on which the resource instance depends for the system side through the obtaining interface of the resource instance dependency relationships; the system side calling a required dependency relationship set of the resource instances from the service side which stores the resource instance dependency relationships according to the resource instance and the resource type identifiers; and the system side returning the obtained dependency relationship set of the resource instance to the service side through the obtaining interface of the resource instance dependency relationships.

A device for association management of network resources, comprising a service side and a system side, wherein
the service side is configured to classify network resources, set resource type identifiers for the network resources and send dependency relationships between the resource type identifiers and the resource types to the system side; and
the system side is configured to build a data model for storing resource type dependency relationships according to the received dependency relationships between the resource type identifiers and the resource types and to provide interfaces used for operating the resource type dependency relationships and one or more interfaces used for operating resource instance dependency relationships for the service side, wherein the data model corresponds to a directed acyclic graph, wherein the resource instance dependency is indicative of dependency of a resource instance of one resource type on one or more resource instances of another resource type, wherein the resource instance dependency relationships are built according to the resource type dependency relationships, wherein the system side is configured to build the data model including the step of: creating a data structure of the resource types, wherein the data structure includes a data field and a successor field, in which the data field stores the resource type identifiers of the resource types or a resource type object containing the resource type identifiers, and the successor field stores the dependency relationships of the resource types;
in which, the interfaces used for operating the resource type dependency relationships comprise a query interface of the resource type dependency relationships; and
the service side is further configured to inquire from the system side about the resource type dependency relationships through the query interface of the resource type dependency relationships;
in which, the one or more interfaces used for operating the resource instance dependency relationships is an obtaining interface of the resource instance dependency relationships; and
the service side is further configured to obtain the resource instance dependency relationships from the system side through the obtaining interface of the resource instance dependency relationships.

As can be seen from the technical solution above, a complete association relationship for the network resource is established in the present invention through the management, which is realized by establishing a directed acyclic graph, of the resource type dependency relationship performed by the system side and, through the uniform management of the resource instance dependency relationship performed by the system side or the management of respective resource instance dependency relationship performed by the service side, so as to manage and maintain the association relationship between network resources on the whole. Besides, if a new network resource and the dependency relationship thereof need to be added, a connected subgraph associated with the resource type can be added in the resource type dependency relationship diagram conveniently. In addition, the present invention also provides a firm foundation for resource query, resource association analysis, resource exclusive usage and so on.

### Brief Description of the Drawings

Fig. 1 shows a flow chart of a method for association management of network resources according to the present invention;
Fig. 2 shows a flow chart of an embodiment of a method for management association of network resources according to the present invention;
Fig. 3 shows a diagram of a dependency relationship among network element, rack, single board and port in a network management system;
Fig. 4 shows a data model diagram of network element, rack, single board and port in a network management system; and
Fig. 5 shows a schematic structural diagram of a device for association management of network resources according to the present invention.

### Detailed Description of Embodiments

Before describing the technical solution of the present invention in detail, the association relationships of network resources will be firstly introduced. The association relationships of the network resources are divided into resource type dependency and resource instance dependency, wherein the resource type dependency indicates that a dependency relationship exists between one type of resources and another type of resources, and the resource instance dependency indicates that the resource instance belonging to one type of resources depends on one or more resource instances belonging to another type of resources. The resource instance dependency is built according to the resource type dependency, that is to say, if two types of resources do not have a dependency relationship, the resource instances of the two types of resources do not have a dependency relationship either. The resource dependency relationship is multidimensional, that is, one resource type can depend on multiple resource types, and also can be depended upon by multiple resource types, and so is the resource instance. The association relationships of the network resources are built based on a data model; on this basis, the association relationships between network resources can be extracted quickly so that resource query, resource association analysis and so on can be performed. In order to avoid bringing troubles to a user when presenting the data model to the user, the resource dependency can not form a dependency loop, for example, Network Resource A depends on Network Resource B, Network Resource B depends on Network Resource C and Network Resource C depends on Network Resource A. Actually, this circular dependency does not exist in the network management either.

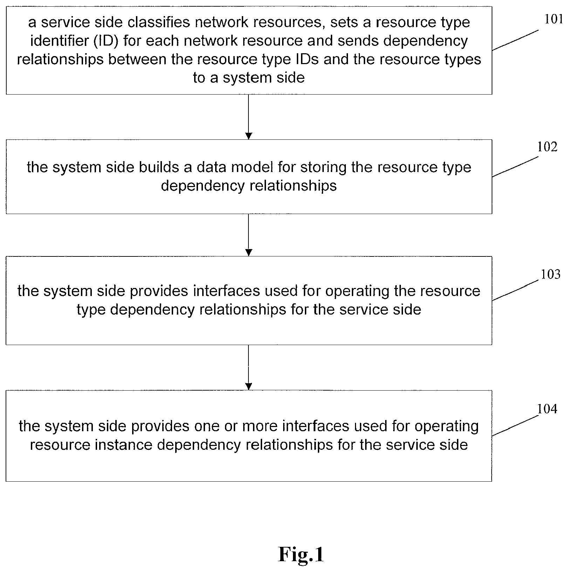

As shown in Fig. 1, the method for association management of network resources according to the present invention comprises the following steps.

Step 101: a service side classifies network resources, sets a resource type identifier (ID) for each network resource and sends dependency relationships between the resource type IDs and the resource types to a system side.

The classification of network resources is to guarantee that each network resource only belongs to one resource type.

Step 102: the system side builds a data model for storing the resource type dependency relationships according to the received dependency relationships between the resource type IDs and the resource types.

The step of building a data model specifically comprises the step of: for each resource type, creating a data structure of the resource type, wherein the data structure includes a data field and a successor field. The data field stores the basic information of the resource type which can be the resource type ID or a resource type object containing the resource type ID, and the successor field stores the dependency relationship of the resource type used for indicating which resource types the resource type depends on. A predecessor field also can be added in the data structure, wherein the predecessor field stores the depended relationship of the resource type, used for indicating which resource types depend on the resource type.

Preferably, after step 102, the method for association management of network resources further comprises the step of: performing reliability check for the built dependency relationships between the resource types. On one hand, it is to guarantee that no circular dependency relationship exists, and on the other hand, since there might be many resource types, if there are some false dependency relationships, for example, some resource type depends on the non-existing resource type, the false dependency relationships would be given up so as to avoid influencing the establishment of the whole dependency relationship.

Step 103: the system side provides interfaces used for operating the resource type dependency relationships for the service side.

The interfaces used for operating the resource type dependency relationships comprise: a query interface of the resource type dependency relationships, a creating interface of the resource type dependency relationships and a deleting interface of the resource type dependency relationships.

The query interface is used by the service side to inquire from the system side about the resource type dependency relationships; the creating interface is used by the service side to create the resource type dependency relationships and store the created resource type dependency relationships at the system side; and the deleting interface is used by the service side to delete the resource type dependency relationships from the system side.

Step 104: the system side provides one or more interfaces used for operating resource instance dependency relationships for the service side.

Herein, there are two modes for providing the one or more interfaces used for operating resource instance dependency relationships. The first mode is to provide a creating interface, a deleting interface and a query interface of the resource instance dependency relationships. In the creating interface of the resource instance dependency relationships, a tag indicating whether a resource instance is exclusive or shared for the resource instance is also provided; if the resource instance is shared, the shared frequency of the resource instance, that is, which dependent resource instances can share the resource instance and the shared times of the resource instance, also can be recorded in the shared tag. The creating interface is used by the service side to create the resource instance dependency relationships and store the created resource instance dependency relationships at the system side. The deleting interface is used by the service side to delete the resource instance dependency relationships from the system side. The query interface is used by the service side to query the resource instance dependency relationships at the system side. The second mode is that the system side provides an obtaining interface of the resource instance dependency relationships. Specifically, the system side defines the obtaining interface of the resource instance dependency relationship, the service side implements the obtaining interface of the resource instance dependency relationships, and then the system side calls back the resource instance dependency relationships through the obtaining interface. In the second mode, the system side does not store the dependency relationships of the resource instances and the dependency relationships of the resource instances are stored at different service sides; when Service Side M needs the resource instance dependency relationships of Service Side N, Service Side M notifies the system side through the obtaining interface, the system side obtains the resource instance dependency relationships of Service Side N and returns the resource instance dependency relationships to Service Side M through the obtaining interface. Practice indicates that the mode of providing an obtaining interface for the service side and managing and scheduling the operating process uniformly has a good effect in the actual application.

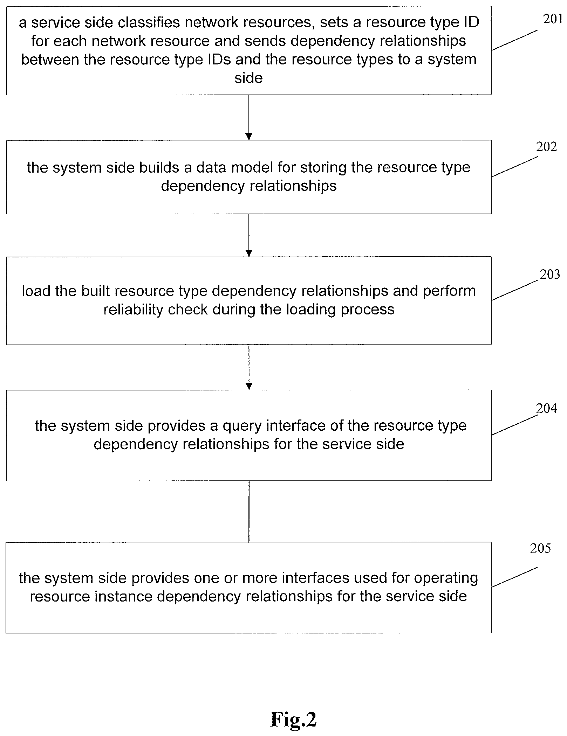

In order to illustrate the technical solution of the present invention clearly, a specific network resource association relationship is provided below, and the technical solution of the present invention is further illustrated in detail by taking the implementation of the association relationship in Java for example. As shown in Fig. 2, the embodiment comprises the following steps.

Step 201: a service side classifies network resources, sets a resource type ID for each network resource and sends dependency relationships between the resource type IDs and the resource types to a system side.

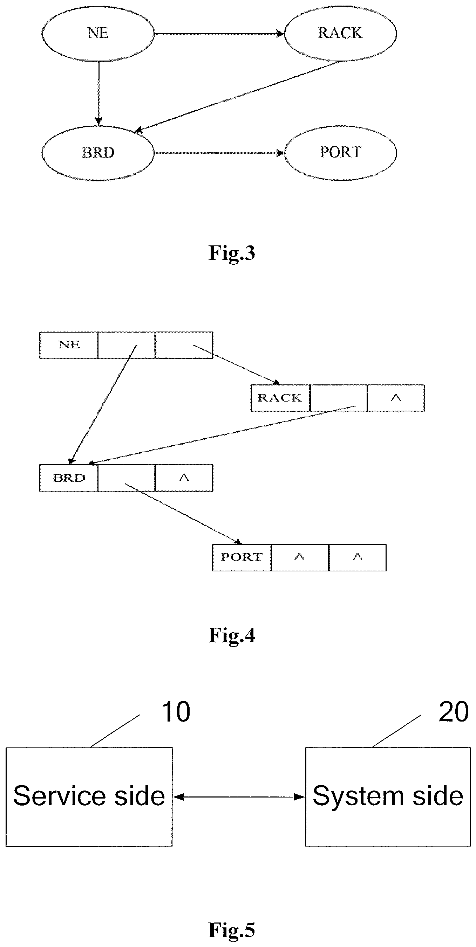

As shown in Fig. 3, provided that there are four kinds of network resources in the network management system: Network Element (NE), RACK, Single Board (BRD) and PORT, the resource type dependency relationships shown in Fig. 3 such as: NE depends on RACK, RACK depends on BRD, BRD depends on PORT, and sometimes, NE can directly depend on BRD, need to be created and presented in the network management system. Then the dependency relationships between the resource type IDs of NE, RACK, BRD, PORT and the resource types are sent to the system side.

Step 202: the system side builds a data model for storing the resource type dependency relationships according to the received dependency relationships between the resource type IDs and the resource types.

As for the example in the step 201, the data model of NE, RACK, BRD and PORT can be built according to the specific process of building data model described in the step 102, as shown in Fig. 4. The data field of NE stores the resource type identifier NE and the successor field thereof stores the dependency relationship of the NE, specifically including two references to node pointing to BRD and RACK; the data field of RACK stores the resource type identifier RACK and the successor field thereof contains a reference to node pointing to BRD; and the data field of BRD stores the resource type identifier BRD and the successor field thereof contains a reference to node pointing to PORT.

According to the dependency relationships of NE, RACK, BRD and PORT, the data model shown in Fig. 4 is equivalent to a directed acyclic graph, which belongs to one part of the resource type dependency relationship diagram in the whole network management system and is a connected subgraph. The definition of the connected subgraph is: if one node can finish the traversal of part of the nodes in the resource type dependency relationship diagram, these nodes form a connected subgraph. Herein, the node refers to a certain resource type.

Step 203: load the built resource type dependency relationships and perform reliability check during the loading process to guarantee that legal dependency relationships are loaded. During the start process of the system, the resource type dependency relationships are loaded and cached by way of asynchronous thread so as to avoid influencing the start speed of the system when there are many network resource associations. The loading process is to read the relationship data (relationship data also can be from the database in the system) configured by the service side in the configuration files into a memory, store the relationship data in a predefined Relationship objects, and store the resource type IDs as Keys and the Relationship objects as the corresponding attribute values into a HashMap, wherein the instance of the HashMap is a cache of for saving the resource type dependency relationships for the convenience of the subsequent quick search. After the loading is completed, the system side also provides a relationship loading completion identifier so as to avoid the service side reading and presenting false or incomplete resource type dependency relationships when the loading is not finished.

Step 204: the system side provides a query interface of the resource type dependency relationships for the service side.

The process of the service side inquiring from the system side about the resource type dependency relationships through the query interface of the resource type dependency relationships is that: the service side provides a resource type ID for the system side through the query interface of the resource type dependency relationships, the system side obtains the dependency relationship set of the resource type according to the resource type ID and returns the obtained dependency relationship set of the resource type to the service side through the query interface of the resource type dependency relationships. The resource type dependency relationships obtained by the system side can be presented in a form of relationship tree, or diagram, or table at the service side.

The process of the system side obtaining the dependency relationship set and the depended relationship set of the resource types is that: quickly locate in the cache of the resource type dependency relationships according to a resource type ID, and after finding the location of the resource type in the resource type dependency relationship diagram, traverse downwards by layer to obtain the dependency relationship set or traverse upwards to obtain the depended relationship set.

When obtaining the resource type dependency relationships, the internal of the system side can quickly find the resource type dependency relationship by binary search way, wherein the time complexity of this algorithm is O(logN), which basically can meet the search of large scale of data; and in addition, quicker search also can be performed by hash technology and the time complexity of this algorithm can reach O(1).

In addition, practice indicates that the dependency relationships of the resource types mostly is a static relationship with few changes, so in actual application, it is not necessary to provide a creating interface of the resource type dependency relationships and a deleting interface of the resource type dependency relationships for the service side. If the resource type dependency relationship data need to be changed, the original resource type dependency relationship data can be modified directly, wherein the resource type dependency relationship data can be the relationship data stored in the configuration files, also can be the relationship data stored in the database. After modification, the system needs to be restarted.

Step 205: the system side provides one or more interfaces used for operating resource instance dependency relationships for the service side.

If the system side provides the creating, deleting and query interfaces of the resource instance dependency relationships, the service side can create the dependency relationships of the resource instances through the creating interface of the resource instance dependency relationships and store the created resource instance dependency relationships at the system side; the service side can delete the resource instance dependency relationships from the system side through the deleting interface of the resource instance dependency relationships; and the service side can obtain the resource instance dependency relationships in the system side through the query interface of the resource instance dependency relationships.

The process of the service side inquiring from the system side about the resource instance dependency relationships through the query interface of the resource instance dependency relationships is that: the service side provides a resource instance and the resource type IDs of the resource types on which the resource instance depends for the system side through the query interface of the resource instance dependency relationships; and the system side obtains required dependency relationship set of the resource instance according to the resource instance and the resource type IDs and returns the obtained dependency relationship set of the resource instance to the service side through the query interface of the resource instance dependency relationships.

In actual application, the dependency relationships of the resource instances have large changes, not all resource instance dependency relationships are suitable to be stored at the system side, and sometimes the dependency relationships of the resource instances are temporary, therefore, there is another obtaining mode of the resource instance dependency relationships, that is, the system side defines an obtaining interface of the resource instance dependency relationships, the service side implements the obtaining interface of the resource instance dependency relationships, and then the system side calls back the resource instance dependency relationships through the obtaining interface.

The process of the service side obtaining the resource instance dependency relationships from the system side through the obtaining interface of the resource instance dependency relationships is that: the service side provides a resource instance and the resource type IDs of the resource types on which the resource instance depends for the system side through the obtaining interface of the resource instance dependency relationships; and the system side calls required dependency relationship set of the resource instance from the service side which stores the resource instance dependency relationships according to the resource instance and the resource type IDs of the resource types on which the resource instance depends, and returns the obtained dependency relationship set of the resource instance to the service side through the obtaining interface of the resource instance dependency relationships.

In order to implement the method above, a device for association management of network resources is correspondingly provided by the present invention. As shown in Fig. 5, the device comprises a service side 10 and a system side 20.

In the above, the service side 10 is configured to classify network resources, set resource type identifiers for the network resources and send dependency relationships between the resource type identifiers and the resource types to the system side 20.

The system side 20 is configured to build a data model for storing the resource type dependency relationships according to the received dependency relationships between the resource type identifiers and the resource types and to provide interfaces used for operating the resource type dependency relationships and one or more interfaces used for operating resource instance dependency relationships for the service side 10.

In this case, the interfaces for operating the resource type dependency relationships comprise a query interface of the resource type dependency relationships. The service side 10 is further configured to inquire from the system side 20 about the resource type dependency relationships through the query interface of the resource type dependency relationships.

In this case, the one or more interfaces used for operating resource instance dependency relationships comprise: a creating interface of the resource instance dependency relationships, a deleting interface of the resource instance dependency relationships and a query interface of the resource instance dependency relationships. The service side 10 is further configured to: inquire about the resource instance dependency relationships from the system side 20 through the query interface of the resource instance dependency relationships.

Alternatively, the one or more interfaces used for operating resource instance dependency relationships also can be an obtaining interface of the resource instance dependency relationships. The service side 10 is further configured to obtain the resource instance dependency relationships from the system side 20 through the obtaining interface of the resource instance dependency relationships.

The above are only the preferred embodiments of the present invention and are not intended to limit the protection scope of the present invention.

## Claims

1. A method for association management of network resources, comprising the steps of:
a service side (10) classifying network resources, setting (101) resource type identifiers for the network resources and sending dependency relationships between the resource type identifiers and resource types to a system side;
the system side (20) building (102) a data model for storing resource type dependency relationships according to the received dependency relationships between the resource type identifiers and the resource types, wherein the data model corresponds to a directed acyclic graph; and
the system side providing (103) interfaces for operating the resource type dependency relationships and providing (104) one or more interfaces for operating resource instance dependency relationships for the service side,
wherein the resource instance dependency is indicative of dependency of a resource instance of one resource type on one or more resource instances of another resource type, wherein the resource instance dependency relationships are built according to the resource type dependency relationships,
wherein the step of building a data model comprises the step of:
creating a data structure of the resource types, wherein the data structure includes a data field and a successor field, in which the data field stores the resource type identifiers of the resource types or a resource type object containing the resource type identifiers, and the successor field stores the dependency relationships of the resource types.

2. The method for association management of network resources according to Claim 1, wherein the data structure further comprises a predecessor field which stores the depended relationships of the resource types.

3. The method for association management of network resources according to Claim 1, further comprising: after the system side has built the data model to finish the management of the resource type dependency relationships, performing (203) reliability check for the built dependency relationships between the resource types.

4. The method for association management of network resources according to any one of Claims 1 to 3, wherein the interfaces for operating the resource type dependency relationships comprise a query interface of the resource type dependency relationships; and
wherein the method further comprises the step of: after the data model has been built, the service side inquiring the system side about resource type dependency relationships through the query interface of the resource type dependency relationships.

5. The method for association management of network resources according to Claim 4, wherein the process of inquiring about the resource type dependency relationships comprises the steps of:
the service side providing a resource type identifier for the system side through the query interface of the resource type dependency relationships;
the system side obtaining a dependency relationship set of the resource types according to the resource type identifier; and
the system side returning the obtained dependency relationship set of the resource types to the service side through the query interface of the resource type dependency relationships.

6. The method for association management of network resources according to any one of Claims 1 to 3, wherein the one or more interfaces for operating the resource instance dependency relationships comprise: an interface for creating the resource instance dependency relationships, an interface for deleting the resource instance dependency relationships, and an interface for inquiring the resource instance dependency relationships.

7. The method for association management of network resources according to any one of Claims 1 to 3, wherein the one or more interfaces for operating the resource instance dependency relationships is an interface for obtaining the resource instance dependency relationships; and
wherein the method further comprises the step of: the service side obtaining the resource instance dependency relationships from the system side through the interface for obtaining the resource instance dependency relationships.

8. The method for association management of network resources according to Claim 7, wherein the step of obtaining the resource instance dependency relationships comprises the steps of:
the service side providing a resource instance and resource type identifiers of the resource types on which the resource instance depends to the system side through the interface for obtaining the resource instance dependency relationships;
the system side calling for a required dependency relationship set of the resource instances from the service side which stores the resource instance dependency relationships according to the resource instance and the resource type identifiers; and
the system side returning the obtained dependency relationship set of the resource instance to the service side through the interface for obtaining the resource instance dependency relationships.

9. A device for association management of network resources, the device comprising a service side (10) and a system side (20), wherein
the service side is configured to classify network resources, set resource type identifiers for the network resources and send dependency relationships between the resource type identifiers and the resource types to the system side; and
the system side is configured to build a data model for storing resource type dependency relationships according to the received dependency relationships between the resource type identifiers and the resource types and to provide interfaces for operating the resource type dependency relationships and one or more interfaces for operating resource instance dependency relationships for the service side, wherein the data model corresponds to a directed acyclic graph, wherein the resource instance dependency is indicative of dependency of a resource instance of one resource type on one or more resource instances of another resource type, wherein the resource instance dependency relationships are built according to the resource type dependency relationships, wherein the system side is configured to build the data model including the step of:
creating a data structure of the resource types, wherein the data structure includes a data field and a successor field, in which the data field stores the resource type identifiers of the resource types or a resource type object containing the resource type identifiers, and the successor field stores the dependency relationships of the resource types.

10. The device for association management of network resources according to Claim 9, wherein the interfaces for operating the resource type dependency relationships comprise a query interface of the resource type dependency relationships; and
wherein the service side is further configured to inquire the system side about resource type dependency relationships through the query interface of the resource type dependency relationships after the data model has been built.

11. The device for association management of network resources according to Claim 9 or 10, wherein the one or more interfaces for operating the resource instance dependency relationships is an interface for obtaining the resource instance dependency relationships; and
wherein the service side is further configured to obtain the resource instance dependency relationships from the system side through the interface for obtaining the resource instance dependency relationships.

## Patentansprüche

1. Verfahren zur Verwaltung der Zuordnung von Netzwerkressourcen, umfassend die folgenden Schritte:
Klassifizieren von Netzwerkressourcen, Festlegen (101) von Ressourcentypkennungen für die Netzwerkressourcen durch eine Serviceseite (10), und Senden von Abhängigkeitsbeziehungen zwischen den Ressourcentypkennungen und Ressourcentypen an eine Systemseite;
Aufbauen (102) eines Datenmodells zum Speichern von Ressourcentyp-Abhängigkeitsbeziehungen gemäß den empfangenen Abhängigkeitsbeziehungen zwischen den Ressourcentypkennungen und den Ressourcentypen durch die Systemseite (20), wobei das Datenmodell einem gerichteten azyklischen Graphen entspricht; und
Bereitstellen (103) von Schnittstellen zum Betreiben der Ressourcentyp-Abhängigkeitsbeziehungen durch die Systemseite, und Bereitstellen (104) einer oder mehrerer Schnittstellen zum Betreiben von Ressourceninstanz-Abhängigkeitsbeziehungen für die Serviceseite,
wobei die Ressourceninstanz-Abhängigkeit die Abhängigkeit einer Ressourceninstanz eines Ressourcentyps von einer oder mehreren Ressourceninstanzen eines anderen Ressourcentyps anzeigt, wobei die Ressourceninstanz-Abhängigkeitsbeziehungen gemäß den Ressourcentyp-Abhängigkeitsbeziehungen aufgebaut sind,
wobei der Schritt zum Erstellen eines Datenmodells den folgenden Schritt umfasst:
Erstellen einer Datenstruktur der Ressourcentypen, wobei die Datenstruktur ein Datenfeld und ein Nachfolgefeld beinhaltet, in dem das Datenfeld die Ressourcentypkennung der Ressourcentypen oder ein Ressourcentyp-Objekt mit den Ressourcentyp-Identifikatoren speichert, und das Nachfolgefeld die Ressourcentyp-Abhängigkeitsbeziehungen speichert.

2. Verfahren zur Verwaltung der Zuordnung von Netzwerkressourcen nach Anspruch 1, wobei die Datenstruktur ferner ein Vorgängerfeld umfasst, das die Abhängigkeitsbeziehungen der Ressourcentypen speichert.

3. Verfahren zur Verwaltung der Zuordnung von Netzwerkressourcen nach Anspruch 1, ferner umfassend:
nachdem die Systemseite das Datenmodell aufgebaut hat, um das Management der Ressourcentyp-Abhängigkeitsbeziehungen abzuschließen, Durchführen (203) einer Zuverlässigkeitsprüfung für die aufgebauten Abhängigkeitsbeziehungen zwischen den Ressourcentypen.

4. Verfahren zur Verwaltung der Zuordnung von Netzwerkressourcen nach einem der Ansprüche 1 bis 3, wobei die Schnittstellen zum Betreiben der Abhängigkeitsbeziehungen zwischen Ressourcentypen eine Anfrageschnittstelle der Abhängigkeitsbeziehungen zwischen Ressourcentypen umfassen; und
wobei das Verfahren ferner den Schritt umfasst: nachdem das Datenmodell aufgebaut wurde, Abfragen der Systemseite nach Ressourcentyp-Abhängigkeitsbeziehungen über die Anfrageschnittstelle der Ressourcentyp-Abhängigkeitsbeziehungen durch die Serviceseite.

5. Verfahren zur Verwaltung der Zuordnung von Netzwerkressourcen nach Anspruch 4, wobei der Prozess des Abfragens nach den Abhängigkeitsbeziehungen zwischen Ressourcentypen die folgenden Schritte umfasst:
Bereitstellen einer Ressourcentypkennung für die Systemseite über die Anfrageschnittstelle der Ressourcentyp-Abhängigkeitsbeziehungen durch die Serviceseite;
Erhalten eines Ressourcentyp-Abhängigkeitsbeziehungssets gemäß der Ressourcentypkennung durch die Systemseite; und
Zurücksenden des erhaltenen Ressourcentyp-Abhängigkeitsbeziehungssets an die Serviceseite über die Anfrageschnittstelle der Ressourcentyp-Abhängigkeitsbeziehungen durch die Systemseite.

6. Verfahren zur Verwaltung der Zuordnung von Netzwerkressourcen nach einem der Ansprüche 1 bis 3, wobei die eine oder mehreren Schnittstellen zum Betreiben der Ressourceninstanz-Abhängigkeitsbeziehungen umfassen: eine Schnittstelle zum Erstellen der Ressourceninstanz-Abhängigkeitsbeziehungen, eine Schnittstelle zum Löschen der Ressourceninstanz-Abhängigkeitsbeziehungen und eine Schnittstelle zum Abfragen der Ressourceninstanz-Abhängigkeitsbeziehungen.

7. Verfahren zur Verwaltung der Zuordnung von Netzwerkressourcen nach einem der Ansprüche 1 bis 3, wobei die eine oder mehrere Schnittstellen zum Betreiben der Ressourceninstanz-Abhängigkeitsbeziehungen eine Schnittstelle zum Erhalten der Ressourceninstanz-Abhängigkeitsbeziehungen ist; und wobei das Verfahren ferner den Schritt umfasst:
Erhalten der Ressourceninstanz-Abhängigkeitsbeziehungen von der Systemseite über die Schnittstelle zum Erhalten der Ressourceninstanz-Abhängigkeitsbeziehungen durch die Serviceseite.

8. Verfahren zur Verwaltung der Zuordnung von Netzwerkressourcen nach Anspruch 7, wobei der Schritt zum Erhalten der Ressourceninstanz-Abhängigkeitsbeziehungen die folgenden Schritte umfasst:
Bereitstellen einer Ressourceninstanz und von Ressourcentypkennungen der Ressourcentypen, von denen die Ressourceninstanz für die Systemseite abhängig ist, über die Schnittstelle zum Erhalten der Ressourceninstanz-Abhängigkeitsbeziehungen durch die Serviceseite;
Anfordern eines erforderlichen Ressourceninstanz-Abhängigkeitsbeziehungssets von der Serviceseite, die die Ressourceninstanz-Abhängigkeitsbeziehungen gemäß der Ressourceninstanz und den Ressourcentypkennungen speichert durch die Systemseite; und
Zurücksenden des erhaltenen Ressourceninstanz-Abhängigkeitsbeziehungssets der an die Serviceseite über die Schnittstelle zum Erhalten der Ressourceninstanz-Abhängigkeitsbeziehungen durch die Systemseite.

9. Vorrichtung zur Verwaltung der Zuordnung von Netzwerkressourcen, wobei die Vorrichtung eine Serviceseite (10) und eine Systemseite (20) umfasst, wobei die Vorrichtung
die Serviceseite ausgelegt ist zum Klassifizieren von Netzwerkressourcen, zum Festlegen von Ressourcentypkennungen für die Netzwerkressourcen und zum Senden von Abhängigkeitsbeziehungen zwischen den Ressourcentypkennungen und den Ressourcentypen an die Systemseite; und
die Systemseite ausagelegt ist zum Aufbau eines Datenmodells zum Speichern von Ressourcentyp-Abhängigkeitsbeziehungen gemäß den empfangenen Abhängigkeitsbeziehungen zwischen den Ressourcentypkennungen und den Ressourcentypen und zum Bereitstellen von Schnittstellen zum Betreiben der Ressourcentyp-Abhängigkeitsbeziehungen und einer oder mehrerer Schnittstellen zum Betreiben von Ressourceninstanz-Abhängigkeitsbeziehungen für die Serviceseite, wobei das Datenmodell einem gerichteten azyklischen Graphen entspricht, wobei die Ressourceninstanzabhängigkeit die Abhängigkeit einer Ressourceninstanz eines Ressourcentyps von einer oder mehreren Ressourceninstanzen eines anderen Ressourcentyps anzeigt, wobei die Ressourceninstanz-Abhängigkeitsbeziehungen gemäß den Ressourcentyp-Abhängigkeitsbeziehungen aufgebaut sind, wobei die Systemseite ausgelegt ist zum Aufbau des Datenmodells mit dem Schritt:
Erstellen einer Datenstruktur der Ressourcentypen, wobei die Datenstruktur ein Datenfeld und ein Nachfolgefeld beinhaltet, in dem das Datenfeld die Ressourcentyp-Identifikatoren der Ressourcentypen oder ein Ressourcentyp-Objekt mit den Ressourcentyp-Identifikatoren speichert und das Nachfolgefeld die Ressourcentyp-Abhängigkeitsbeziehungen speichert.

10. Vorrichtung zur Verwaltung der Zuordnung von Netzwerkressourcen nach Anspruch 9, wobei die Schnittstellen zum Betreiben der Ressourcentyp-Abhängigkeitsbeziehungen eine Anfrageschnittstelle der Ressourcentyp-Abhängigkeitsbeziehungen umfassen; und wobei die Serviceseite ferner ausgelegt ist zum Abfragen der Systemseite nach Ressourcentyp-Abhängigkeitsbeziehungen über die Anfrageschnittstelle der Ressourcentyp-Abhängigkeitsbeziehungen, nachdem das Datenmodell aufgebaut worden ist.

11. Vorrichtung zur Verwaltung der Zuordnung von Netzwerkressourcen nach Anspruch 9 oder 10, wobei die eine oder mehrere Schnittstellen zum Betreiben der Ressourceninstanz-Abhängigkeitsbeziehungen eine Schnittstelle zum Erhalten der Ressourceninstanz-Abhängigkeitsbeziehungen ist; und
wobei die Serviceseite ferner ausgelegt ist zum Erhalten der Ressourceninstanz-Abhängigkeitsbeziehungen von der Systemseite über die Schnittstelle zum Erhalten der Ressourceninstanz-Abhängigkeitsbeziehungen.

## Revendications

1. Procédé permettant une gestion d'association de ressources réseau, comprenant les étapes suivantes :
un côté de service (10) classifiant des ressources réseau, définissant (101) des identifiants de type de ressource pour les ressources réseau et envoyant des relations de dépendance entre les identifiants de type de ressource et des types de ressource à un côté système ;
le côté système (20) construisant (102) un modèle de données destiné à stocker des relations de dépendance de type de ressource selon les relations de dépendance reçues entre les identifiants de type de ressource et les types de ressource, le modèle de données correspondant à un graphe acyclique orienté ; et
le côté système fournissant (103) des interfaces destinées à opérer les relations de dépendance de type de ressource et fournissant (104) une ou plusieurs interfaces destinées à opérer des relations de dépendance d'instance de ressource pour le côté de service,
la dépendance d'instance de ressource indiquant une dépendance d'une instance de ressource d'un type de ressource vis-à-vis d'une ou plusieurs instances de ressource d'un autre type de ressource, les relations de dépendance d'instance de ressource étant construites selon les relations de dépendance de type de ressource,
l'étape consistant à construire un modèle de données comprenant l'étape suivante :
créer une structure de données des types de ressource, la structure de données comportant un champ de données et un champ de successeur, le champ de données stockant les identifiants de type de ressource des types de ressource ou un objet de type de ressource contenant les identifiants de type de ressource, et le champ de successeur stockant les relations de dépendance des types de ressource.

2. Procédé permettant une gestion d'association de ressources réseau selon la revendication 1, dans lequel la structure de données comprend en outre un champ de prédécesseur qui stocke les relations de dépendance des types de ressource.

3. Procédé permettant une gestion d'association de ressources réseau selon la revendication 1, comprenant en outre : après que le côté système a construit le modèle de données pour terminer la gestion des relations de dépendance de type de ressource, exécuter (203) un contrôle de fiabilité en ce qui concerne les relations de dépendance construites entre les types de ressource.

4. Procédé permettant une gestion d'association de ressources réseau selon l'une quelconque des revendications 1 à 3, dans lequel les interfaces destinées à opérer les relations de dépendance de type de ressource comprennent une interface de requête des relations de dépendance de type de ressource ; et
le procédé comprenant en outre l'étape suivante :
après que le modèle de données a été construit, le côté de service interrogeant le côté système en ce qui concerne des relations de dépendance de type de ressource par l'intermédiaire de l'interface de requête des relations de dépendance de type de ressource.

5. Procédé permettant une gestion d'association de ressources réseau selon la revendication 4, dans lequel le processus d'interrogation concernant les relations de dépendance de type de ressource comprend les étapes suivantes :
le côté de service fournissant un identifiant de type de ressource pour le côté système par l'intermédiaire de l'interface de requête des relations de dépendance de type de ressource ;
le côté système obtenant un ensemble de relations de dépendance des types de ressource selon l'identifiant de type de ressource ; et
le côté système retournant l'ensemble de relations de dépendance obtenu des types de ressource au côté de service par l'intermédiaire de l'interface de requête des relations de dépendance de type de ressource.

6. Procédé permettant une gestion d'association de ressources réseau selon l'une quelconque des revendications 1 à 3, dans lequel les une ou plusieurs interfaces destinées à opérer les relations de dépendance d'instance de ressource comprennent : une interface destinée à créer les relations de dépendance d'instance de ressource, une interface destinée à supprimer les relations de dépendance d'instance de ressource, et une interface destinée à faire une requête concernant les relations de dépendance d'instance de ressource.

7. Procédé permettant une gestion d'association de ressources réseau selon l'une quelconque des revendications 1 à 3, dans lequel les une ou plusieurs interfaces destinées à opérer les relations de dépendance d'instance de ressource sont une ou des interfaces destinées à obtenir les relations de dépendance d'instance de ressource ; et
le procédé comprenant en outre l'étape suivante :
le côté de service obtenant les relations de dépendance d'instance de ressource à partir du côté système par l'intermédiaire de l'interface pour obtenir les relations de dépendance d'instance de ressource.

8. Procédé permettant une gestion d'association de ressources réseau selon la revendication 7, dans lequel l'étape consistant à obtenir les relations de dépendance d'instance de ressource comprend les étapes suivantes :
le côté de service fournissant une instance de ressource et des identifiants de type de ressource des types de ressource vis-à-vis desquels l'instance de ressource dépend au côté système par l'intermédiaire de l'interface destinée à obtenir les relations de dépendance d'instance de ressource ;
le côté système demandant un ensemble de relations de dépendance requis des instances de ressource au côté de service qui stocke les relations de dépendance d'instance de ressource selon l'instance de ressource et les identifiants de type de ressource ; et
le côté système retournant l'ensemble de relations de dépendance obtenu de l'instance de ressource au côté de service par l'intermédiaire de l'interface destinée à obtenir les relations de dépendance d'instance de ressource.

9. Dispositif permettant une gestion d'association de ressources réseau, le dispositif comprenant un côté de service (10) et un côté système (20), dans lequel :
le côté de service est configuré pour classifier des ressources réseau, définir des identifiants de type de ressource pour les ressources réseau et envoyer des relations de dépendance entre les identifiants de type de ressource et les types de ressource au côté système ; et
le côté système est configuré pour construire un modèle de données destiné à stocker des relations de dépendance de type de ressource selon les relations de dépendance reçues entre les identifiants de type de ressource et les types de ressource et pour fournir des interfaces destinées à opérer les relations de dépendance de type de ressource et une ou plusieurs interfaces destinées à opérer des relations de dépendance d'instance de ressource pour le côté de service, le modèle de données correspondant à un graphe acyclique orienté, la dépendance d'instance de ressource indiquant une dépendance d'une instance de ressource d'un type de ressource vis-à-vis d'une ou plusieurs instances de ressource d'un autre type de ressource, les relations de dépendance d'instance de ressource étant construites selon les relations de dépendance de type de ressource, le côté système étant configuré pour construire le modèle de données comprenant l'étape suivante :
créer une structure de données des types de ressource, la structure de données comportant un champ de données et un champ de successeur, le champ de données stockant les identifiants de type de ressource des types de ressource ou un objet de type de ressource contenant les identifiants de type de ressource, et le champ de successeur stockant les relations de dépendance des types de ressource.

10. Dispositif permettant une gestion d'association de ressources réseau selon la revendication 9, dans lequel les interfaces destinées à opérer les relations de dépendance de type de ressource comprennent une interface de requête des relations de dépendance de type de ressource ; et
le côté de service étant en outre configuré pour interroger le côté système en ce qui concerne des relations de dépendance de type de ressource par l'intermédiaire de l'interface de requête des relations de dépendance de type de ressource après que le modèle de données a été construit.

11. Dispositif permettant une gestion d'association de ressources réseau selon la revendication 9 ou 10, dans lequel les une ou plusieurs interfaces destinées à opérer les relations de dépendance d'instance de ressource sont une ou des interfaces destinées à obtenir les relations de dépendance d'instance de ressource ; et
le côté de service étant en outre configuré pour obtenir les relations de dépendance d'instance de ressource à partir du côté système par l'intermédiaire de l'interface destinée à obtenir les relations de dépendance d'instance de ressource.
